# EUROPEAN PATENT SPECIFICATION

(11) **EP 3 282 165 B1**
(45) Date of publication and mention of the grant of the patent: **30.12.2020**
(21) Application number: 17185591.9
(22) Date of filing: 09.08.2017
(51) Int. Cl.: F16M 11/04, G03B 17/56

(54) **QUICK CONNECTION STRUCTURE AND PHOTOGRAPHIC APPARATUS USING THE SAME**
SCHNELLVERBINDUNGSSTRUKTUR UND FOTOGRAFISCHE VORRICHTUNG DAMIT
STRUCTURE DE CONNEXION RAPIDE ET APPAREIL PHOTOGRAPHIQUE L'UTILISANT

(30) Priority: 12.08.2016 CN 201610663220; 15.11.2016 CN 201621227973 U
(43) Date of publication of application: 14.02.2018
(73) Proprietor: Zhongshan Dashan Photographic Equipment Co., Ltd., Dabu Village, Sanxiang Town Zhongshan City Guangdong (CN)
(72) Inventor: Xiao, Fan, Zhongshan City, Guangdong (CN)
(74) Representative: HWP Intellectual Property

(56) References cited:
- WO-A1-2008/028351
- DE-U1-202009 018 225
- FR-A- 1 064 065
- JP-A- 2006 118 557
- US-A- 2 448 817
- US-A- 5 156 141
- US-A- 5 682 199

## Description

### TECHNICAL FIELD

The disclosure relates to a photographic apparatus, and in particular to a quick connection structure for a photographic apparatus.

### BACKGROUND

At present, after a photographic apparatus is assembled, screws are generally used for locking and fastening components of the photographic apparatus, which results in slow connection and mounting between the components and thus often delays the shooting time in the nick of time. As we know, in We media times, capturing the splendid moment and pre-empting the release of headline news is very important so that time is crucial. Therefore, how to improve the connection efficiency between photographic apparatuses becomes crucial.
A connector for coupling an endoscope to a video camera disclosed by US 5,156,141 A comprises three axially-aligned and rigidly joined component elements including a first adapter for quickly and easily connecting and disconnecting an endoscope, and a second adapter for connection to a video camera. The three components of the coupling apparatus are fixed against rotation relative to one another, while the first adapter permits rotation of the endoscope with respect to the coupling apparatus and the attached camera.
A video endoscopes with interchangeable endoscope heads disclosed by US 5,682,199 A allows the optional simple and easy rotation of the endoscope head and light source relative to the video camera head to achieve a desired endoscope head orientation.
A fastening device for detachably connecting one article to another disclosed by US 2,448,817 A comprises a body, a sleeve slidable along said body, a plurality of hook members and means engaging said one part of each member. The sleeve is provided with a pair of diametrically opposed openings and is coupled to the body through the medium of a pin.
A quick connector for camera and pan head disclosed by WO 2008/028351 comprises antislip cushions, a knob, an upper cover, a fixation seat, a turntable cam, a positive stop, a compression spring, groove shaped pressing blocks and cam pins.

### SUMMARY

The disclosure aims to overcome the drawbacks of the existing technology and provides a quick connection structure according to independent claim 1, and a method for assembling a photographic apparatus according to independent claim 13. The quick connection structure has a more reasonable structure and is easier and more convenient to operate and with which an apparatus, after being connected and mounted to a proper location, may be self locked without other parts to screw and fasten. Further, the disclosures provides a photographic apparatus using the quick connection structure.

In order to solve the above existing technical problem, the disclosure adopts the features as defined in claim 1.

In some embodiments a locking shaft hole is defined between the locking sleeve and the base body, and the locking shaft hole being a tapered hole with a wider top and a narrower bottom.

In some embodiments, the platform locking unit comprises a locking block arranged in a through hole of the base body and a locking block return spring making the locking block move radially outwards to abut the inner surface of the locking sleeve.

In some embodiments, the side wall of an insert column at the lower part of the connection platform is provided with a locking groove for receiving a locking protrusion of the locking block.

In some embodiments, the quick connection structure further includes a locking spring arranged at the lower part of the base body to make the locking sleeve move upwards along the outer wall of the base body. In some embodiments, the locking spring has an elastic force greater than that of the locking block return spring.

In some embodiments, the end part of the locking protrusion of the locking block and the locking groove at the lower part of the connection platform are provided with a matching slope.

In some embodiments, the connection hole of the base body is an oblique hole and the insert column at the lower part of the connection platform is an oblique column both with a wider top and a narrower bottom.

In some embodiments, the lower side of the locking protrusion is a slope, the bottom surface of the locking groove of the insert column is a slope, and the locking groove has a size greater than that of the locking protrusion of the locking block.

The present invention also provides a photographic apparatus including a camera connected to a support by means of above quick connection structure.

The present invention also provides a camera in combination with above quick connection structure.

The present invention also provides a support in combination with above quick connection structure.

The present invention also provides a method for assembling a photographic apparatus including a camera and the above quick connection structure.

Compared with the existing technology, the embodiments of the present invention has benefits as follows: in the quick connection structure, after the hole wall of the tapered locking shaft hole of the locking sleeve releases the lock of the locking block while the locking sleeve sleeved on the outside of the base body slides downwards, the locking block moves outwards under the action of the locking block return spring, thus the connection platform for mounting an apparatus may be inserted; then, upon release of the locking sleeve, after the locking sleeve moves upwards under the action of the locking spring, the locking block slides towards the direction of the connection hole of the base body and engages in the locking groove at the lower part of the connection platform; in this way, the mounting and locking of the connection platform is completed automatically after the locking sleeve moves upwards, and other parts such as screws are not needed to lock the platform; therefore, the design of the present invention has a more reasonable structure and is more concise and convenient to operate.

The disclosure is described below in further detail in conjunction with accompanying drawings and specific embodiments.

### BRIEF DESCRIPTION OF THE DRAWINGS

FIG. 1 is a perspective view of an first embodiment of the disclosure.
FIG. 2 is a longitudinal cross section of the first embodiment of the disclosure.
FIG. 3 is transverse cross section of the first embodiment of the disclosure.
FIG. 4 is an exploded view of the first embodiment of the disclosure.
FIG. 5 is a longitudinal cross section of an second embodiment of the disclosure.
FIG. 6 is a transverse cross sectional view of the second embodiment of the disclosure.
FIG. 7 is an exploded view of the second embodiment of the disclosure.

### DESCRIPTION OF THE EMBODIMENTS

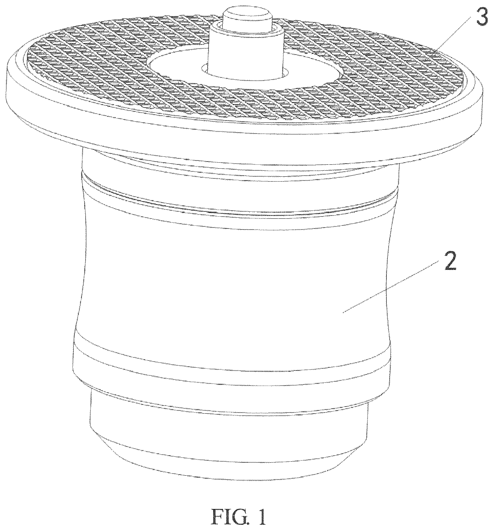

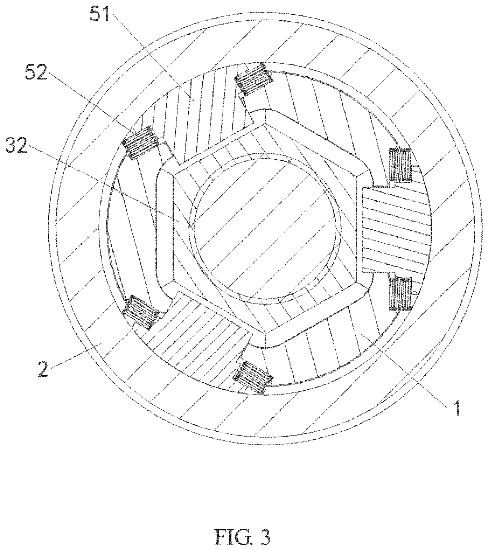

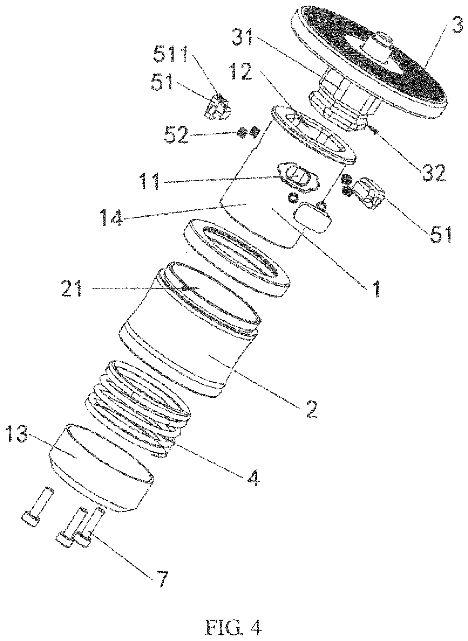

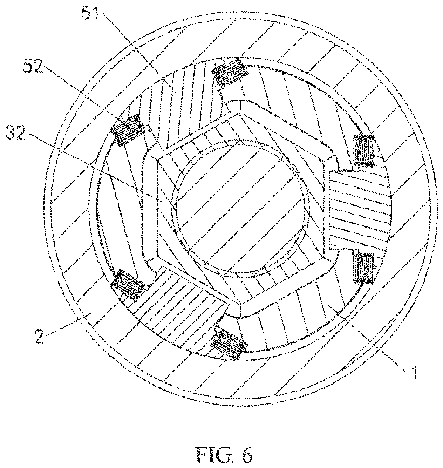

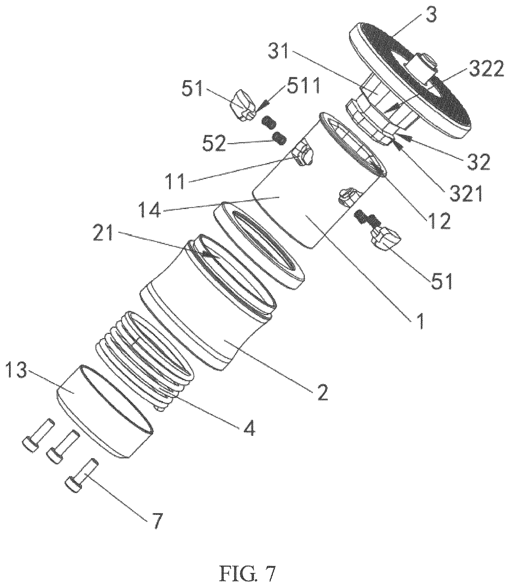

The disclosure refers to a quick connection structure, which, as shown in FIG. 1 to FIG. 7, includes a base body 1, a locking sleeve 2 slidably sleeved on the outside of the base body 1, a connection platform 3 with a lower part received in a connection hole 12 of the base body 1, and a locking spring 4 arranged at the lower part of the base body 1 to make the locking sleeve 2 move upwards along the outer wall of the base body 1. At least one set of platform locking unit 5 is arranged in the base body 1, wherein the platform locking unit 5 includes a locking block 51 arranged in a through hole 11 of the base body 1 and a locking block return spring 52 making the locking block 51 move outwards to abut against the hole wall of a locking shaft hole 21 of the locking sleeve 2. The locking shaft hole 21 is a tapered hole with a wider top and a narrower bottom. The side wall of an insert column 31 at the lower part of the connection platform 3 is provided with a locking groove 32 for receiving a locking protrusion 511 of the locking block 51; and the locking spring 4 has an elastic force greater than that of the locking block return spring 52. When the locking sleeve 2 moves upwardly, the locking block 51 moves inwardly until the locking protrusion 511 thereof is engaged in the locking groove 32. As the outer end face of the locking block 51 is urged against the hole wall of the locking shaft hole 21 of the locking sleeve 2, in this way, the connection platform 3 cannot be pulled out, and thus realizes the rapid assembly of the connection structure.

When the connection structure is used for a photographic apparatus, for example, to mount a camera to a support which is connected or to be connected to the base body, directly or indirectly by means of another element, the camera is firstly mounted onto the connection platform 3. Then, the connection platform 3 is positioned with the insert column 31 at the lower part thereof aligned with the connection hole 12 of the base body 1, and the locking sleeve 2 is manually pulled downwards so that the locking sleeve 2 slides downwards by overcoming the force action of the locking spring 4, at this time the aperture of the locking shaft hole 21 corresponding to the location of the locking block 51 becomes larger and the locking block 51 in the through hole 11 slides outwards under the resilient force of the locking block return spring 52. When the locking protrusion 511 of the locking block 51 leaves the connection hole 12 of the base body 1, the insert column 31 at the lower part of the connection platform 3 can be inserted into the connection hole 12 of the base body 1. Then, upon release of the locking sleeve 2, the locking sleeve 2 is moved upwards under the resilient force of the locking spring 4, at the same time the locking block 51 slides inwards by means of the thrust of the hole wall of the tapered locking shaft hole 21 until the locking protrusion 511 of the locking block 51 is engaged in the locking groove 32 of the insert column 31, in this way, the connection platform 3 is locked in the base body 1 and cannot be pulled out; thus, the quick connection and assembling of the photographic apparatus is completed.

From the above it can be seen that, in the disclosure, after the hole wall of the tapered locking shaft hole of the locking sleeve releases the lock of the locking block while the locking sleeve sleeved on the outside of the base body slides downwards, the locking block moves outwards under the action of the locking block return spring, thus the connection platform 3 for mounting an apparatus such as a camera can be inserted. Then, upon release of the locking sleeve, after the locking sleeve is moved upwards under the action of the locking spring 4, the locking block 51 slides into the connection hole 12 of the base body 1 and is clamped into the locking groove 32 at the lower part of the connection platform 3; in this way, the mounting and locking of the connection platform 3 is achieved automatically after the locking sleeve moves to a position where the locking block 51 engages in the locking groove 32, and therefore other parts such as screws are not needed to lock the platform. Thus, the disclosure has a more reasonable structure and is more concise and convenient to operate.

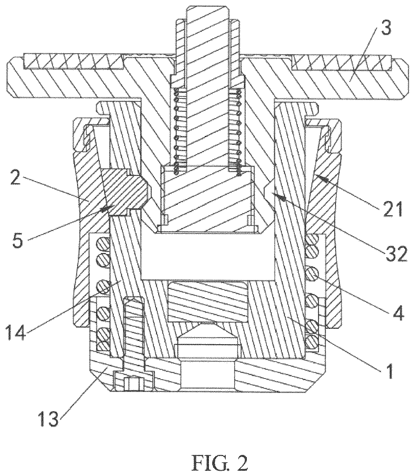

In the first embodiment, as shown in FIG. 2 to FIG. 4, the end part of the locking protrusion 511 of the locking block 51 and the locking groove 32 at the lower part of the connection platform 3 are respectively provided with a matched slope, such that the locking groove 32 exactly clamps the upper and lower ends of the locking protrusion 511; in this way, it is not only convenient for the locking protrusion 511 to fall into the locking groove 32, but also reduces a potential looseness of the connection platform 3, thus the photographic apparatus is avoid to shake during operation.

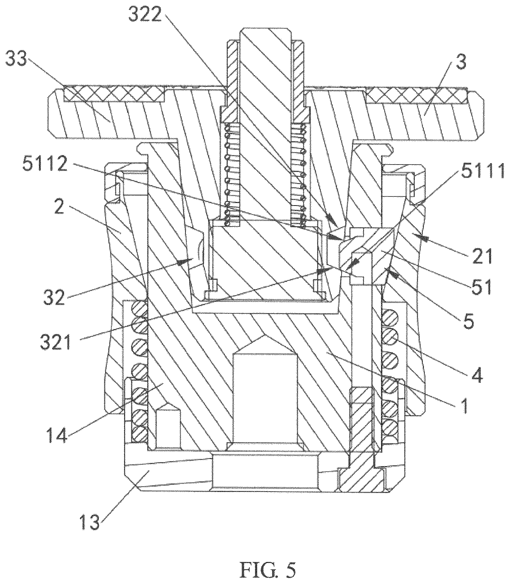

In an alternative second embodiment, as shown in FIG. 5 to FIG. 7, the connection hole 12 of the base body 1 is an oblique hole and the insert column 31 at the lower part of the connection platform 3 is an oblique column both with a wider top and a narrower bottom. A lower side 5111 of the locking protrusion 511 is a slope, a bottom surface 321 of the locking groove 32 of the insert column 31 is a slope, and the locking groove 32 has a size greater than the locking protrusion 511 of the locking block 51 (such that the locking groove 32 does not interfere the locking block 51 to pull the connection platform 3 downwards). During usage, the oblique lower side 5111 of the locking protrusion 511 acts on the oblique bottom surface 321 of the locking groove 32 to pull the connection platform 3 downwards, such that the insert column 31 of the connection platform 3 is more tightly adhered to the hole wall of the connection hole 12 of the base body 1; this construction has two benefits as follows. First, clearance between the insert column and the connection hole may be eliminated, thereby avoiding the looseness of the connection platform, that is, further reducing the shake of the photographic apparatus, and further improving shooting quality; Second, after the photographic apparatus have being used for a period of time, even if abrasion occurs between the locking protrusion 511 and the locking groove 32 and between the insert column 31 and the connection hole 12 of the base body 1, since margins are reserved between the bottom surface of the insert column 31 and the bottom surface of the connection hole 12 of the base body 1, between the top surface of the base body 1 and the bottom surface of a support protruding platform 33 of the connection platform 3 and between the insert column 31 and the vertical wall of the connection hole 12 of the base body 1, when the oblique lower side 5111 of the locking protrusion 511 acts on the oblique bottom surface 321 of the locking groove 32, the connection platform 3 may be pulled downwards to eliminate the shake of the connection platform 3 caused by abrasion, such that the stability of shooting quality still can be ensured in long-term use. In this embodiment, a top surface 322 of the locking groove 32 and an upper side 5112 of the locking protrusion 511 are oblique too, of course, they also can be straight.

In the first embodiment and the second embodiment, the insert column 31 of the connection platform 3 and the connection hole 12 of the base body 1 are hexagonal, or non-circular such as quadrangular, pentagonal or elliptic. In addition, in particular, there are three sets of platform locking units 5 provided in the first embodiment and the second embodiment.

In the first embodiment and the second Embodiment, the base body 1 includes a base 13 and a main body 14, which are fixed together by means of a screw 7. The base 13 can be connected to a support for a photographic apparatus.

The above described are the preferred embodiments of the disclosure merely, but not to limit the implementation scope of the patent. Any equivalent changes and modifications made based on the content of the disclosure are intended to be included within the technical scope of the disclosure.

## Claims

1. A quick connection structure for a photographic apparatus comprising
a base body (1),
a locking sleeve (2) slidably sleeved on the outside of the base body (1),
a connection platform (3) with a lower part received in a connection hole (12) of the base body (1),
at least one set of platform locking unit (5) being arranged in the base body (1), wherein
the platform locking unit (5) is configured to be slidable between a release position and a lock position when the locking sleeve (2) slides down and up along the base body (1), the platform locking unit (5) engages with the lower part of the connection platform (3) when the platform locking unit (5) locates at the lock position and disengages with the lower part of the connection platform (3) when the platform locking unit (5) locates at the release position,
**characterized in that**,
the connection hole (12) is a non-circular hole and an insert column (31) at the lower part of
the connection platform (3) is a non-circular column, non-circular such as hexagonal, quadrangular, pentagonal or elliptic.

2. The quick connection structure according to claim 1, wherein a locking shaft hole (21) is defined between the locking sleeve (2) and the base body (1), and the locking shaft hole (21) being a tapered hole with a wider top and a narrower bottom.

3. The quick connection structure according to claim 2, wherein the platform locking unit (5) comprises a locking block (51) arranged in a through hole (11) of the base body (1) and a locking block return spring (52) making the locking block (51) move radially outwards to abut the inner surface of the locking sleeve (2).

4. The quick connection structure according to claim 3, wherein the side wall of the insert column (31) at the lower part of the connection platform (3) is provided with a locking groove (32) for receiving a locking protrusion (511) of the locking block (51).

5. The quick connection structure according to anyone of claims 1 to 4, further comprising a locking spring (4) arranged at the lower part of the base body (1) to make the locking sleeve (2) move upwards along the outer wall of the base body (1).

6. The quick connection structure according to claims 3 or 4, further comprising a locking spring (4) arranged at the lower part of the base body (1) to make the locking sleeve (2) move upwards along the outer wall of the base body (1), and the locking spring (4) has an elastic force greater than that of the locking block return spring (52).

7. The quick connection structure according to claim 4, wherein the end part of the locking protrusion (511) of the locking block (51) and the locking groove (32) at the lower part of the connection platform (3) are provided with a matching slope.

8. The quick connection structure according to claim 4, wherein the connection hole (12) of the base body (1) is an oblique hole and the insert column (31) at the lower part of the connection platform (3) is an oblique column both with a wider top and a narrower bottom.

9. The quick connection structure according to claim 4, wherein the lower side of the locking protrusion (511) is a slope, the bottom surface of the locking groove (32) of the insert column (31) is a slope, and the locking groove (32) has a size greater than that of the locking protrusion (511) of the locking block (51).

10. A photographic apparatus comprising a camera connected to a support by means of the quick connection structure according to anyone of the preceding claims.

11. A camera in combination with a quick connection structure according to one of the claims 1 to 9.

12. A support in combination with a quick connection structure according to one of the claims 1 to 9.

13. A method for assembling a photographic apparatus comprising a camera and a quick connection structure according to anyone of claims 1-9, the method comprising:
mounting the camera onto the connection platform (3);
aligning the lower part of the connection platform (3) with the connection hole (12) of the base body (1);
pulling the locking sleeve (2) downwards to make the platform locking unit (5) move to the release position;
inserting the lower part of the connection platform (3) into the connection hole of the base body (1);
releasing the locking sleeve (2) to let it move upwardly such that the platform locking unit (5) moves inwardly and engages with the lower part of the connection platform (3) to lock the connection platform (3).

## Patentansprüche

1. Eine Schnellverbindungsstruktur für eine fotografische Vorrichtung, umfassend einen Grundkörper (1),
eine Verriegelungshülse (2), die verschiebbar auf die Außenseite des Grundkörpers (1) aufgeschoben ist,
eine Verbindungsplattform (3) mit einem unteren Teil, der in einem Verbindungsloch (12) des Grundkörpers (1) aufgenommen ist,
mindestens einen Satz einer Plattformverriegelungseinheit (5), der in dem Grundkörper (1) angeordnet ist, wobei
die Plattformverriegelungseinheit (5) so konfiguriert ist, dass sie zwischen einer Entriegelungsposition und einer Verriegelungsposition verschiebbar ist, wenn die Verriegelungshülse (2) auf und ab entlang des Grundkörpers (1) gleitet,
die Plattformverriegelungseinheit (5) in den unteren Teil der Verbindungsplattform (3) eingreift, wenn sich die Plattformverriegelungseinheit (5) an der Verriegelungsposition befindet und sich aus dem unteren Teil der Verbindungsplattform (3) löst, wenn sich die Plattformverriegelungseinheit (5) an der Entriegelungsposition befindet,
**dadurch gekennzeichnet, dass**
das Verbindungsloch (12) ein unrundes Loch ist und eine Einsetzsäule (31) am unteren Teil der Verbindungsplattform (3) eine unrunde Säule ist, unrund wie z.B. hexagonal, viereckig, fünfeckig oder elliptisch.

2. Die Schnellverbindungsstruktur nach Anspruch 1, wobei ein Verriegelungsschaftloch (21) zwischen der Verriegelungshülse (2) und dem Grundkörper (1) definiert ist, und das Verriegelungsschaftloch (21) ein sich verjüngendes Loch mit einer breiteren Oberseite und einer schmäleren Unterseite ist.

3. Die Schnellverbindungsstruktur nach Anspruch 2, wobei die Plattformverriegelungseinheit (5) eine Verriegelungssperre (51) umfasst, die in einem Durchgangsloch (11) des Grundkörpers (1) angeordnet ist und eine Verriegelungssperren-Rückstellfeder (52), die die Verriegelungssperre dazu veranlasst, sich radial nach außen zu bewegen, um an die innere Oberfläche der Verriegelungshülse (2) anzustoßen.

4. Die Schnellverbindungsstruktur nach Anspruch 3, wobei die Seitenwand der Einsetzsäule (31) am unteren Teil der Verbindungsplattform (3) mit einer Verriegelungsnut (32) versehen ist, um einen Verriegelungsvorsprung (511) der Verriegelungssperre (51) aufzunehmen.

5. Die Schnellverbindungsstruktur nach einem der Ansprüche 1 bis 4, des Weiteren umfassend eine Verriegelungsfeder (4), die an dem unteren Teil des Grundkörpers (1) angeordnet ist, um die Verriegelungshülse (2) dazu zu veranlassen, sich aufwärts entlang der Außenwand des Grundkörpers (1) zu bewegen.

6. Die Schnellverbindungsstruktur nach Anspruch 3 oder 4, des Weiteren umfassend eine Verriegelungsfeder (4), die an dem unteren Teil des Grundkörpers (1) angeordnet ist, um die Verriegelungshülse (2) dazu zu veranlassen, sich aufwärts entlang der Außenwand des Grundkörpers (1) zu bewegen, und die Verriegelungsfeder (4) hat eine Spannkraft, die größer ist als die der Verriegelungssperren-Rückstellfeder (52).

7. Die Schnellverbindungsstruktur nach Anspruch 4, wobei das Endteil des Verriegelungsvorsprungs (511) der Verriegelungssperre (51) und die Verriegelungsnut (32) am unteren Teil der Verbindungsplattform (3) mit einer passenden geneigten Ebene versehen sind.

8. Die Schnellverbindungsstruktur nach Anspruch 4, wobei das Verbindungsloch (12) des Grundkörpers (1) ein schräges Loch ist und die Einsetzsäule (31) am unteren Teil der Verbindungsplattform (3) eine schräge Säule ist, beide jeweils mit einem breiteren Oberteil und einem schmäleren Unterteil.

9. Die Schnellverbindungsstruktur nach Anspruch 4, wobei die untere Seite des Verriegelungsvorsprungs (511) eine geneigte Ebene ist, die Bodenfläche der Verriegelungsnut (32) der Einsetzsäule (31) eine geneigte Ebene ist, und die Verriegelungsnut (32) eine Größe hat, die größer ist als die des Verriegelungsvorsprungs (511) der Verriegelungssperre (51).

10. Eine fotografische Vorrichtung umfassend eine Kamera, die mit einem Träger mittels der Schnellverbindungsstruktur gemäß einem der vorhergehenden Ansprüche verbunden ist.

11. Eine Kamera in Kombination mit einer Schnellverbindungsstruktur nach einem der Ansprüche 1 bis 9.

12. Ein Träger in Kombination mit einer Schnellverbindungsstruktur nach einem der Ansprüche 1 bis 9.

13. Ein Verfahren zum Zusammenbauen einer fotografischen Vorrichtung umfassend eine Kamera und eine Schnellverbindungsstruktur nach einem der Ansprüche 1-9, wobei das Verfahren umfasst:
Montieren der Kamera auf der Verbindungsplattform (3);
Ausrichten des unteren Teils der Verbindungsplattform (3) mit dem Verbindungsloch (12) des Grundkörpers (1);
Nach-Unten-Ziehen der Verriegelungshülse (2), um die Plattformverriegelungseinheit (5) dazu zu veranlassen, sich in die Entriegelungsposition zu bewegen;
Einsetzen des unteren Teils der Verbindungsplattform (3) in das Verbindungsloch des Grundkörpers (1);
Freigeben der Verriegelungshülse (2), um sie so nach oben bewegen zu lassen, dass sich die Plattformverriegelungseinheit (5) innenseitig bewegt und mit dem unteren Teil der Verbindungsplattform (3) in Eingriff gelangt, um die Verbindungsplattform (3) zu verriegeln.

## Revendications

1. Structure de connexion rapide pour un appareil photographique comprenant
un corps de base (1),
un manchon de verrouillage (2) emmanché de manière coulissante sur l'extérieur du corps de base (1),
une plateforme de connexion (3) avec une partie inférieure dans un trou de connexion (12) du corps de base (1),
au moins un ensemble de l'unité de verrouillage de plateforme (5) étant placé dans le corps de base (1), dans laquelle
l'unité de verrouillage de plateforme (5) est conçue pour être coulissante entre une position de libération et une position de verrouillage quand le manchon de verrouillage (2) coulisse vers le bas et le haut le long du corps de base (1), l'unité de verrouillage de plateforme (5) se met en prise avec la partie inférieure de la plateforme de connexion (3) quand l'unité de verrouillage de plateforme (5) se met à la position de verrouillage et se désengage de la partie inférieure de la plateforme de connexion (3) quand l'unité de verrouillage de plateforme (5) se met dans la position de libération, **caractérisée en ce que**
le trou de connexion (12) est un trou non circulaire et une colonne d'insert (31) à la partie inférieure de la plateforme de connexion (3) est une colonne non circulaire, non circulaire comme hexagonale, quadrangulaire, pentagonale ou elliptique.

2. Structure de connexion rapide selon la revendication 1, dans laquelle un trou d'arbre de verrouillage (21) est défini entre le manchon de verrouillage (2) et le corps de base (1), le trou d'arbre de verrouillage (21) étant un trou conique avec une partie supérieure plus large et une partie inférieure plus étroite.

3. Structure de connexion rapide selon la revendication 2, dans laquelle l'unité de verrouillage de plateforme (5) comprend un bloc de verrouillage (51) placé dans un trou traversant (11) du corps de base (1) et un ressort de rappel de bloc de verrouillage (52) amenant le bloc de verrouillage (51) à se déplacer radialement vers l'extérieur pour s'appuyer contre la surface intérieure du manchon de verrouillage (2).

4. Structure de connexion rapide selon la revendication 3, dans laquelle la paroi latérale de la colonne d'insert (31) dans la partie inférieure de la plateforme de connexion (3) est dotée d'une rainure de verrouillage (32) pour recevoir une saillie de verrouillage (511) du bloc de verrouillage (51).

5. Structure de connexion rapide selon l'une quelconque des revendications 1 à 4, comprenant en outre un ressort de verrouillage (4) placé dans la partie inférieure du corps de base (1) pour amener le manchon de verrouillage (2) à se déplacer vers le haut le long de la paroi extérieure du corps de base (1).

6. Structure de connexion rapide selon les revendications 3 ou 4, comprenant en outre un ressort de verrouillage (4) placé dans la partie inférieure du corps de base (1) pour amener le manchon de verrouillage (2) à se déplacer vers le haut le long de la paroi extérieure du corps de base (1), et le ressort de verrouillage (4) a une force élastique supérieure à celle du ressort de rappel du bloc de verrouillage (52).

7. Structure de connexion rapide selon la revendication 4, dans laquelle la partie d'extrémité de la saillie de verrouillage (511) du bloc de verrouillage (51) et la rainure de verrouillage (32) dans la partie inférieure de la plateforme de connexion (3) sont dotées d'une pente correspondante.

8. Structure de connexion rapide selon la revendication 4, dans laquelle le trou de connexion (12) du corps de base (1) est un trou oblique et la colonne d'insert (31) dans la partie inférieure de la plateforme de connexion (3) est une colonne oblique à la fois avec une partie supérieure plus large et une partie inférieure plus étroite.

9. Structure de connexion rapide selon la revendication 4, dans laquelle le côté inférieur de la saillie de verrouillage (511) est une pente, la surface inférieure de la rainure de verrouillage (32) de la colonne d'insert (31) est une pente, et la rainure de verrouillage (32) a une dimension supérieure à celle de la saillie de verrouillage (511) du bloc de verrouillage (51).

10. Appareil photographique comprenant une caméra connectée à un support au moyen de la structure de connexion rapide selon l'une quelconque des revendications précédentes.

11. Caméra en association avec une structure de connexion rapide selon l'une des revendications 1 à 9.

12. Support en association avec une structure de connexion rapide selon l'une des revendications 1 à 9.

13. Procédé d'assemblage d'un appareil photographique comprenant une caméra et une structure de connexion rapide selon l'une quelconque des revendications 1 à 9, le procédé comprenant :
le montage de la caméra sur la plateforme de connexion (3) ;
l'alignement de la partie inférieure de la plateforme de connexion (3) avec le trou de connexion (12) du corps de base (1) ;
le tirage du manchon de verrouillage (2) vers le bas pour amener l'unité de verrouillage de plateforme (5) à se déplacer vers la position de libération ;
l'insertion de la partie inférieure de la plateforme de connexion (3) dans le trou de connexion du corps de base (1) ;
la libération du manchon de verrouillage (2) pour le laisser se déplacer vers le haut de sorte que l'unité de verrouillage de plateforme (5) se déplace vers l'intérieur et se met en prise avec la partie inférieure de la plateforme de connexion (3) pour verrouiller la plateforme de connexion (3).
